# FASCICULE DE BREVET EUROPEEN

(11) **EP 4 575 679 B1**
(45) Date de publication et mention de la délivrance du brevet: **17.06.2026**
(21) Numéro de dépôt: 23218286.5
(22) Date de dépôt: 19.12.2023
(51) Int. Cl.: G04D 3/00, G04B 17/06, B21F 3/08

(54) **DISPOSITIF POUR LA SÉPARATION DE RESSORTS SPIRAUX ESTRAPADÉS APRÈS UN CYCLE DE DÉTENTE ET PROCÉDÉ DE FABRICATION D'UN RESSORT SPIRAL COMPORTANT UNE ÉTAPE DE SÉPARATION MISE EN OEUVRE PAR UN TEL DISPOSITIF**
VORRICHTUNG ZUM TRENNEN VON AUFGEWUNDEN SPIRALFEDERN NACH EINEM ENTSPANNUNGSZYKLUS UND VERFAHREN ZUR HERSTELLUNG EINER SPIRALFEDER MIT EINER SOLCHEN VORRICHTUNG
DEVICE FOR SEPARATING WOUND SPIRAL SPRINGS AFTER A RELAXATION CYCLE AND METHOD FOR MANUFACTURING A SPIRAL SPRING COMPRISING A SEPARATION STEP IMPLEMENTED BY SUCH A DEVICE

(43) Date de publication de la demande: 25.06.2025
(73) Titulaire: Nivarox-FAR S.A., 2400 Le Locle (CH)
(72) Inventeur: MICHELET, Lionel, 1450 Sainte-Croix (CH); CHAMPEMONT, Pierre, 25390 Vennes (FR); MALLET, Daniel, 25500 Le Bélieu (FR)
(74) Mandataire: ICB SA

(56) Documents cités:
- CH-A- 474 099
- DE-B- 1 279 629
- FR-A1- 2 029 449
- FR-A1- 3 036 813
- FR-A1- 3 107 365
- GB-A- 2 416 408

## Description

### Domaine technique de l'invention

L'invention concerne un procédé de fabrication d'un ressort spiral destiné à équiper un balancier d'un mouvement d'horlogerie, ainsi qu'un procédé de fabrication d'un tel ressort spiral.

L'invention concerne un dispositif pour la séparation de ressorts spiraux permettant de faciliter l'étape de séparation des spiraux après traitement thermique intervenant dans un procédé de fabrication d'un ressort spiral.

L'invention concerne également un procédé de fabrication d'un ressort spiral destiné à équiper un balancier d'un mouvement d'horlogerie.

### Arrière-plan technologique

La fabrication de ressorts spiraux pour l'horlogerie doit faire face à des contraintes souvent à première vue incompatibles :
- nécessité d'obtention d'une limite élastique élevée ;
- facilité d'élaboration, notamment de tréfilage et de laminage ;
- excellente tenue en fatigue ;
- stabilité des performances dans le temps ;
- faibles sections.

La réalisation de ressorts spiraux est en outre centrée sur le souci de la compensation thermique, de façon à garantir des performances chronométriques régulières. Il faut pour cela obtenir un coefficient thermoélastique proche de zéro. On recherche également à réaliser des ressorts spiraux présentant une sensibilité aux champs magnétiques limitée.

Toute amélioration sur au moins l'un de ces points, et en particulier sur la sensibilité aux champs magnétiques limitée, la compensation thermique, et la facilité d'élaboration, notamment d'étirage, de tréfilage et de laminage, représente donc une avancée significative.

Dans le cycle de fabrication d'un ressort spiral, l'opération d'estrapadage consiste à enrouler une pluralité de fils laminés dans un barillet au moyen d'une étoile ou broche d'enroulement de manière à former un ensemble, ou plaque, composé de plusieurs ressorts spiraux estrapadés dans un même plan.

L'ensemble comporte généralement entre 3 et 6 fils enroulés en forme de spiral.

Les différents ressorts spiraux estrapadés sont ensuite fixés par un cycle de détente, généralement un traitement thermique, pour leur donner une forme finale de spirale d'Archimède avec un pas régulier, obtenir le coefficient thermoélastique (CTE) souhaité, et augmenter la dureté. L'étape suivante consiste à séparer les différents ressorts spiraux estrapadés imbriqués. Les documents DE1279629B, CH474099A ou FR2029449A1 décrivent des techniques classiques pour la séparation de spiraux estrapadés.

Cette étape peut devenir particulièrement difficile avec des ressorts spiraux compensateurs, et encore plus particulièrement avec des ressorts spiraux en alliage de titane, la présence de titane dans l'alliage augmentant la force de frottement entre les différents ressorts spiraux estrapadés.

Par conséquent, il existe un besoin pour améliorer cette étape de séparation des ressorts spiraux après estrapadage et traitement thermique, notamment pour minimiser le taux de rebuts lors de la fabrication de tels ressorts spiraux, et notamment des ressorts spiraux compensateurs.

### Résumé de l'invention

Dans ce contexte, l'invention propose un dispositif pour la séparation d'un ensemble de ressorts spiraux estrapadés et ayant subis un cycle de détente, le dispositif comportant :
- un support comportant des encoches destinées à recevoir les brins intérieurs des ressorts spiraux estrapadés constituant l'ensemble ;
le dispositif étant caractérisé en ce qu'il comporte également
- une table vibrante mobile selon deux axes différents qui s'étendent dans un même plan, définissant un plan de mise en vibration P1, la table vibrante étant configurée pour mettre en vibration ledit support dans un plan parallèle au plan de mise en vibration P1.

Un tel dispositif facilite la séparation des ensembles de plusieurs ressorts spiraux estrapadés après traitement thermique. Un tel dispositif est particulièrement efficace sur les ressorts spiraux compensateurs et notamment les ressorts spiraux réalisés dans un alliage de titane.

Préférentiellement les deux axes de vibrations sont orthogonaux entre eux.

La vibration selon deux directions dans un même plan permet notamment d'engendrer des mouvements vibratoires qui sont tangents avec les spires des ressorts spiraux.

Une telle vibration permet de déformer élastiquement les différentes spires de ressorts spiraux en suivant la forme des spires en partant du centre de l'ensemble et en se propageant vers les spires externes des ressorts spiraux.

Outre les caractéristiques évoquées dans le paragraphe précédent, le dispositif selon l'invention peut présenter une ou plusieurs caractéristiques complémentaires parmi les suivantes, considérées individuellement ou selon toutes les combinaisons techniquement possibles :
- la table vibrante vibre selon un mouvement de translation circulaire ;
- le support comporte un corps solidaire de la table vibrante et une broche solidaire du corps et s'étendant perpendiculairement par rapport au corps et par rapport au plan de mise en vibration P1 de ladite table vibrante ;
- les encoches sont ménagées au niveau de l'extrémité libre de la broche ;
- l'extrémité libre de la broche présente une forme conique ;
- le dispositif comporte un éjecteur à air pour éjecter les ressorts spiraux séparés suite à la mise en vibration de la table vibrante ;
- le dispositif comporte un bac de récupération pour recevoir les ressorts spiraux éjectés ;
- le dispositif comporte un capot amovible configuré pour recouvrir au moins partiellement l'extrémité libre de la broche ;
- le capot amovible est mobile entre une position de fermeture empêchant le retrait des ressorts spiraux du support et une position d'ouverture autorisant l'insertion de l'ensemble de ressorts spiraux estrapadés sur le support et le retrait des ressorts spiraux séparés du support ;
- le capot amovible est mobile en translation selon un axe perpendiculaire au plan de mise en vibration **P1** de la table vibrante ;
- le capot amovible comporte un logement configuré pour recevoir l'extrémité libre de la broche lorsqu'il est dans la position de fermeture ;
- le dispositif comporte un moteur configuré pour mettre en vibration la table vibrante à une fréquence comprise entre 1000 Hz et 12000 Hz, préférentiellement entre 4000 Hz et 8000 Hz ;
- le moteur est un moteur pneumatique ou un moteur piézoélectrique.

Un autre aspect de l'invention concerne un procédé de fabrication d'un ressort spiral destiné à équiper un balancier d'un mouvement d'horlogerie.

Selon l'invention, le procédé de fabrication comporte notamment une étape de séparation d'un ensemble de ressorts spiraux estrapadés et ayant subis un cycle de détente par la mise en œuvre du dispositif de séparation selon l'invention.

Préférentiellement, le procédé de fabrication comporte, préalablement à l'étape de séparation, une étape d'estrapadage consistant à enrouler une pluralité de fils laminés dans un barillet au moyen d'une étoile d'estrapadage de manière à former l'ensemble de ressorts spiraux estrapadés.

Préférentiellement, le procédé de fabrication comporte, après l'étape d'estrapadage, une étape de relaxation des contraintes de l'ensemble de ressort spiraux estrapadés de l'ensemble.

Préférentiellement, le ressort spiral est un ressort compensateur.

Préférentiellement, le ressort spiral est réalisé dans un alliage de niobium et de titane.

### Brève description des figures

Les buts, avantages et caractéristiques de la présente invention apparaîtront à la lecture de la description détaillée ci-dessous faisant référence aux figures suivantes :
- la figure 1 représente schématiquement un exemple de réalisation d'un dispositif pour la séparation d'un ensemble de ressorts spiraux estrapadés et ayant subis un cycle de détente selon l'invention ;
- la figure 2 représente schématiquement le dispositif selon l'invention illustré à la figure 1 lors d'une étape de fermeture et de mise en vibration d'un ensemble de ressorts spiraux estrapadés ;
- la figure 3 représente schématiquement le dispositif selon l'invention illustré à la figure 1 lors d'une étape d'éjection des ressorts spiraux séparés après mise en vibration ;
- la figure 4 représente une vue de dessus de la table vibrante et du support du dispositif illustré à la figure 1 ;
- la figure 5 représente un schéma synoptique illustrant les principales étapes d'un procédé de fabrication d'un ressort spiral destiné à équiper un balancier d'un mouvement d'horlogerie selon l'invention ;
- la figure 6 illustre schématiquement un barillet contenant un ensemble de plusieurs ressorts spiraux estrapadés et fixés par un cycle de détente ;
- la figure 7 illustre schématiquement un ressort spiral dans son état final destiné à équiper un balancier d'un mouvement d'horlogerie.

### Description détaillée de l'invention

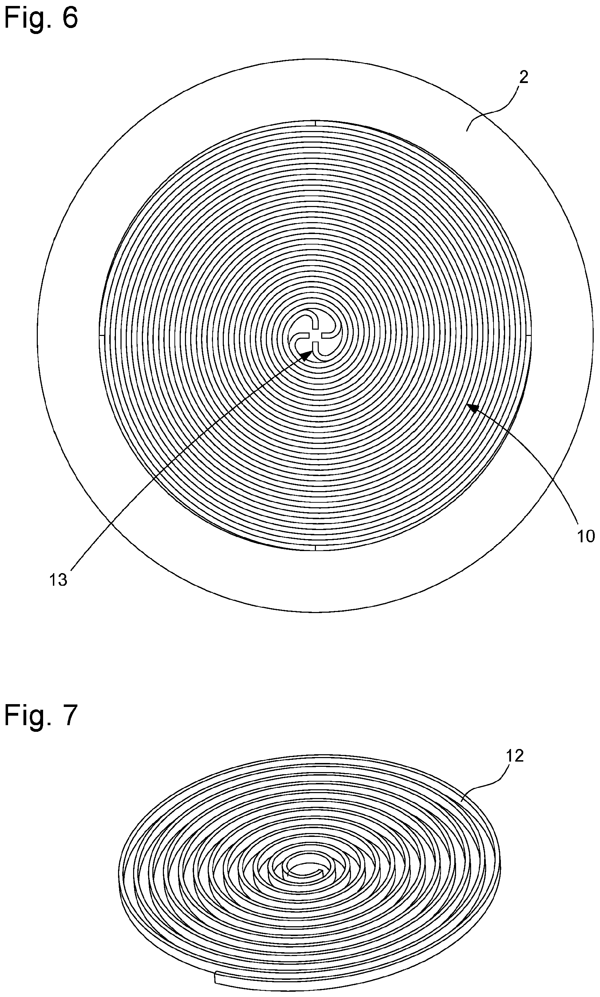

Dans le cycle de fabrication d'un ressort spiral, l'opération d'estrapadage consiste à enrouler une pluralité de fils laminés dans un barillet 2 (illustré à la figure 6) au moyen d'une étoile, ou broche d'enroulement de manière à former un ensemble, ou plaque, composé de plusieurs fils estrapadés qui sont positionnés et enroulés dans un même plan. À partir de cette étape, on considère que les fils estrapadés sont des ressorts spiraux estrapadés puisque la forme est définitive et imposée par le barillet 2.

Les différents ressorts estrapadés composant l'ensemble 10 sont ensuite fixés par un cycle de détente, généralement un traitement thermique, pour leur donner une forme finale de spirale d'Archimède avec un pas régulier.

La figure 6 illustre schématiquement un ensemble 10 de plusieurs ressorts spiraux 12 estrapadés et fixés par un cycle de détente.

La figure 7 illustre schématiquement un ressort spiral 12 dans son état final destiné à équiper un balancier d'un mouvement d'horlogerie.

Généralement, l'ensemble 10 est composé de 3 à 6 ressorts spiraux 12. Dans l'exemple représente, l'ensemble 10 comporte 4 ressorts spiraux 12.

L'étape suivante consiste à séparer les différents ressorts spiraux 12 estrapadés et fixés thermiquement de l'ensemble 10.

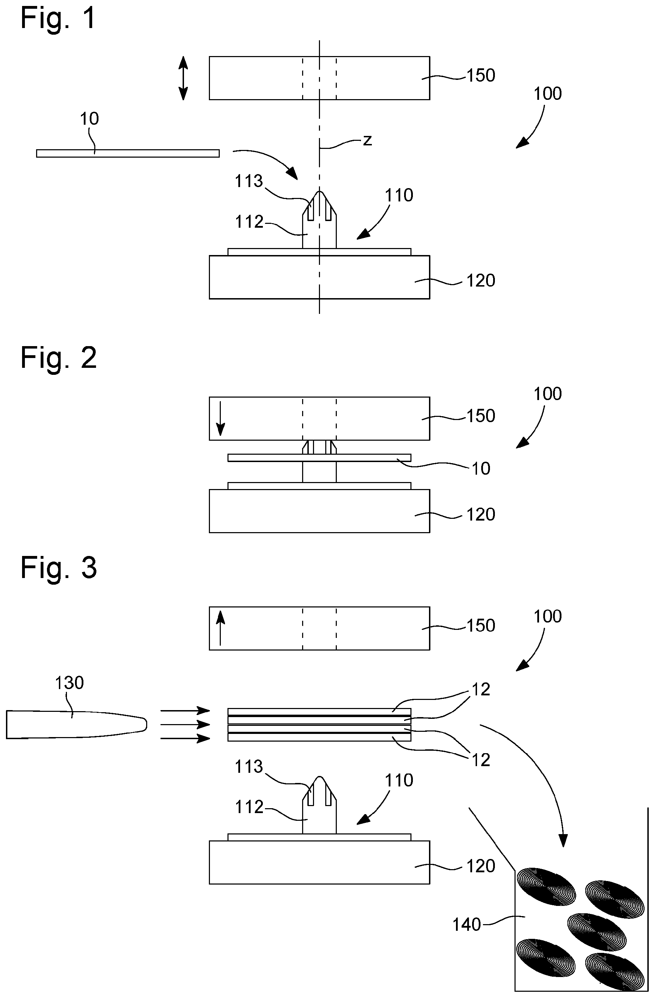

La figure 1 montre une représentation schématique d'un exemple de réalisation d'un dispositif 100 pour la séparation d'un ensemble 10 composé de plusieurs de ressorts spiraux 12 estrapadés et fixés thermiquement.

Le dispositif 100 est décrit en référence aux figures 1 à 4 qui illustrent schématiquement différents états du dispositif 100 lors de l'opération de séparation des ressorts spiraux 12.

Le dispositif 100 comporte un support 110 configuré pour recevoir et maintenir l'ensemble 10 lors de l'opération de séparation.

Plus particulièrement, le support 110 comporte une base ou un corps 111 et une broche 112 s'étendant perpendiculairement au plan général formé par le corps 111.

La broche 112 comporte au niveau de son extrémité libre une pluralité d'encoches 113. Préférentiellement, le nombre d'encoches est supérieur ou égal au nombre de ressorts spiraux estrapadés composant l'ensemble 10. Ainsi, dans l'exemple de réalisation illustré, la broche 112 comporte quatre encoches 113 réparties uniformément à la circonférence de la broche 112.

Préférentiellement, l'extrémité libre portant au moins partiellement les encoches 113 présente un profil conique de manière à faciliter le positionnement de l'ensemble 10 ou le retrait des différents ressorts spiraux 12 séparés.

Les encoches 113 sont configurées pour recevoir les brins intérieurs 13 des ressorts spiraux 12 estrapadés et à maintenir l'ensemble 10 à une certaine distance du corps 111. Ainsi, les différents ressorts spiraux 12 estrapadés de l'ensemble 10 sont maintenus dans le dispositif 100 uniquement par les brins intérieurs formant les extrémités intérieurs des ressorts spiraux 12 estrapadés, les différentes spires des ressorts spiraux 12 estrapadés étant en suspension au-dessus du corps 111 du support 110.

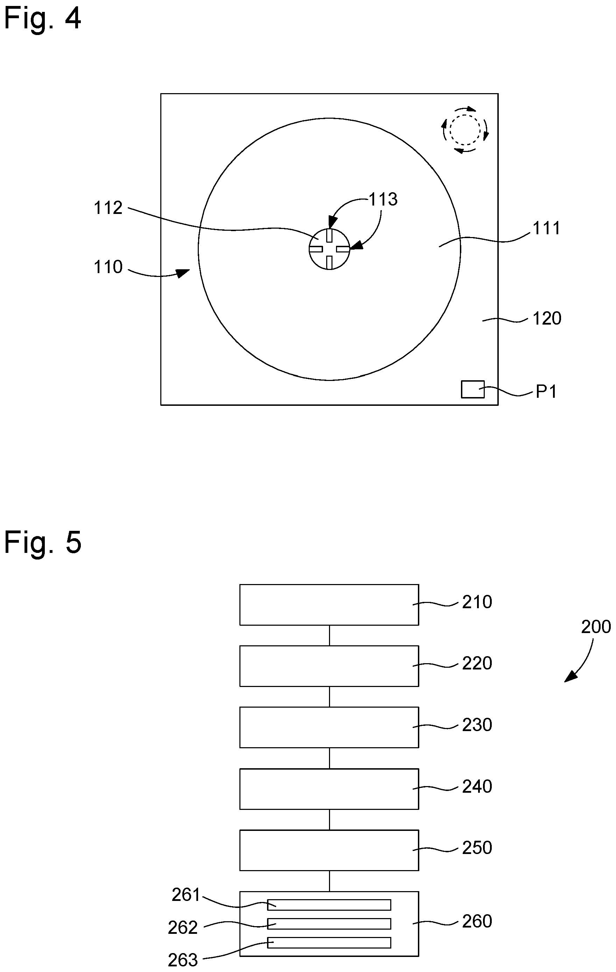

Le dispositif 100 comporte une table vibrante 120 vibrant selon deux axes différents qui s'étendent dans un même plan, définissant un plan de mise en vibration P1, illustré à la figure 4.

Préférentiellement les deux axes de vibrations sont orthogonaux entre eux.

La table vibrante 120 présente un mouvement de translation circulaire dans le plan de mise en vibration P1, comme représenté à la figure 4.

On entend par mouvement de translation circulaire un mouvement plan où tous les points de la table vibrante 120 ont des trajectoires qui sont des cercles de même rayon mais de centres différents.

La table vibrante 120 est mise en vibration, par entraînement mécanique, par un moteur (non représenté). Par exemple, le moteur est un moteur pneumatique ou un moteur piézoélectrique.

Le moteur permet la mise en vibration de la table vibrante 120 à une fréquence comprise entre 1000 Hz et 12000 Hz, préférentiellement entre 4000 Hz et 8000 Hz, par exemple 6000 Hz.

L'amplitude, la fréquence et la puissance de vibration de la table vibrante 120 sont des paramètres modifiables via une interface homme-machine (non représenté).

La table vibrante 120 est solidaire du corps 111 de sorte que le support 110 est également mis en vibration dans un plan parallèle au plan de mise en vibration P1.

Le dispositif 100 comporte en outre un capot amovible 150, ou couvercle, configuré pour venir recouvrir au moins partiellement l'extrémité libre de la broche 112 pour limiter l'ébat axial de l'ensemble 10 et des ressorts spiraux 12 séparés, le long de l'axe longitudinal z de la broche 112, lors de la mise en vibration du support 110.

Le capot amovible 150 comporte une lumière ou une zone de matière en retrait par rapport à sa face inférieure, c'est-à-dire sa face en regard de la table vibrante 120. Cette lumière ou ce retrait de matière forme un logement 151 configuré pour recevoir l'extrémité libre de la broche 112, lorsque le capot amovible 150 est en position de fermeture.

Le capot amovible 150 est mobile entre une position de fermeture limitant l'ébat des ressorts spiraux le long de l'axe z de la broche 112 et empêchant le retrait des ressorts spiraux 12 de la broche 112 du support 110 et une position d'ouverture autorisant l'insertion de l'ensemble 10 de ressorts spiraux estrapadés sur le support 110 et autorisant également le retrait des ressorts spiraux 12 une fois séparés.

Préférentiellement, le capot amovible 150 est mobile en translation selon un axe perpendiculaire au plan de mise en vibration P1 de la table vibrante 120. Préférentiellement, l'axe de translation du capot amovible 150 est confondu avec l'axe longitudinal z de la broche 112.

Le dispositif 100 comporte en outre un éjecteur permettant de retirer les ressorts spiraux 12 séparés du support 110 afin de préparer un nouveau cycle de séparation d'un ensemble 10. Préférentiellement, l'éjecteur 130 est un éjecteur à air, par exemple à air comprimé.

Le dispositif 100 comporte également un bac de récupération 140 pour récupérer et collecter les différents ressorts spiraux 12 éjectés.

L'invention concerne également un procédé de fabrication 200 d'un ressort spiral destiné à équiper un balancier d'un mouvement d'horlogerie comportant au moins une étape 260 de séparation des ressorts spiraux estrapadés et fixés thermiquement mise en œuvre par le dispositif 100 selon l'invention.

Les principales étapes du procédé de fabrication 200 sont représentées en référence à la figure 5.

Le procédé de fabrication 200 comporte successivement les étapes suivantes :
- une étape 210 d'élaboration d'une ébauche dans un alliage, préférentiellement compensateur, et plus particulièrement dans un alliage de titane, préférentiellement un alliage comportant du niobium et du titane,
- une étape 220 d'application audit alliage de séquences couplées de déformation-traitement thermique de précipitation, comportant l'application de déformations alternées à des traitements thermiques, jusqu'à l'obtention d'une microstructure désirée,
- une étape 230 de tréfilage jusqu'à l'obtention d'un fil de section ronde, et laminage à profil rectangulaire compatible avec la section d'entrée d'une broche, ou étoile, d'estrapadage,
- une étape 240 d'estrapadage consistant à enrouler une pluralité de fils laminés dans un barillet au moyen de la broche, ou étoile, d'estrapadage de manière à former l'ensemble 10 de ressorts spiraux 12 estrapadés, les différentes ressorts spiraux 12 étant enroulés dans un même plan,
- une étape 250 de relaxation des contraintes de l'ensemble 10 de ressort spiraux 12 estrapadés pour fixer, par un cycle de détente, la forme finale de spirale d'Archimède des ressorts spiraux 12.

Le procédé de fabrication 200 comporte en outre l'étape 260 de séparation des ressorts spiraux estrapadés et fixés thermiquement lors de l'étape 250. Cette étape 260 de séparation est mise en œuvre par le dispositif 100 de la manière suivante :
- dans une première sous-étape 261 illustrée plus particulièrement à la figure 1, l'ensemble 10, formé de plusieurs ressorts spiraux 12 estrapadés et fixés thermiquement, est positionné sur la broche 112 du support 110, de manière à positionner les brins intérieurs 13 dans les encoches 113 de la broche 112 ; l'ensemble 10 est alors en suspension dans le dispositif 100, maintenu uniquement par les brins intérieurs 13 des ressorts spiraux 12 estrapadés ;
- dans une deuxième sous-étape 262 illustrée plus particulièrement à la figure 2, le capot amovible 150 est abaissé pour être positionné en position de fermeture de manière à éviter la perte de l'ensemble 10 monté sur la broche 112 ; le support 110 est mis en vibration par la table vibrante 120 de manière à générer un mouvement de translation circulaire dans un plan parallèle au plan des ressorts spiraux 12 ; les ressorts spiraux 12 sont alors séparés les uns des autres de sorte et ne sont plus confondus dans un même plan ;
- dans une troisième sous-étape 263 illustrée plus particulièrement à la figure 3, le capot amovible 150 est relevé pour être positionné en position d'ouverture et un flux d'air est généré par l'éjecteur d'air 130 pour éjecter les ressorts spiraux 12 séparés ; les ressorts spiraux finaux 12 sont collectés dans le bac de récupération 140.

## Revendications

1. Dispositif (100) pour la séparation d'un ensemble (10) de ressorts spiraux (12) estrapadés et ayant subis un cycle de détente, le dispositif (100) comportant :
- un support (110) comportant des encoches (113) destinées à recevoir les brins intérieurs (13) des ressorts spiraux (12) estrapadés constituant l'ensemble (10),
le dispositif (100) étant **caractérisé en ce qu'**il comporte également
- une table vibrante (120) mobile selon deux axes différents qui s'étendent dans un même plan, définissant un plan de mise en vibration (P1), la table vibrante (120) étant configurée pour mettre en vibration ledit support (110) dans un plan parallèle au plan de mise en vibration (P1).

2. Dispositif (100) selon la revendication précédente, **caractérisé en ce que** les deux axes de vibrations sont orthogonaux.

3. Dispositif (100) selon l'une des revendications précédentes **caractérisé en ce que** la table vibrante (120) vibre selon un mouvement de translation circulaire.

4. Dispositif (100) selon l'une des revendications précédentes **caractérisé en ce que** le support (11) comporte un corps (111) solidaire de la table vibrante (120) et une broche (112) solidaire du corps (111) et s'étendant perpendiculairement par rapport au corps (111) et par rapport au plan de mise en vibration (P1) de ladite table vibrante (120).

5. Dispositif (100) selon la revendication précédente **caractérisé en ce que** les encoches (113) sont ménagées au niveau de l'extrémité libre de la broche (112).

6. Dispositif (100) selon la revendication précédente **caractérisé en ce que** l'extrémité libre de la broche (112) présente une forme conique.

7. Dispositif (100) selon l'une des revendications précédentes **caractérisé en ce que** le dispositif (100) comporte un éjecteur à air (130) pour éjecter les ressorts spiraux (12) séparés suite à la mise en vibration de la table vibrante (120).

8. Dispositif (100) selon la revendication précédente **caractérisé en ce que** le dispositif (100) comporte un bac de récupération (140) pour recevoir les ressorts spiraux (12) éjectés.

9. Dispositif (100) selon l'une des revendications 5 à 8 **caractérisé en ce que** le dispositif (100) comporte un capot amovible (150) configuré pour recouvrir au moins partiellement l'extrémité libre de la broche (112).

10. Dispositif (100) selon la revendication précédente **caractérisé en ce que** le capot amovible (150) est mobile entre une position de fermeture empêchant le retrait des ressorts spiraux (12) du support (110) et une position d'ouverture autorisant l'insertion de l'ensemble (10) de ressorts spiraux (12) estrapadés sur le support (110) et le retrait des ressorts spiraux (12) séparés du support (110).

11. Dispositif (100) selon la revendication précédente **caractérisé en ce que** le capot amovible (150) est mobile en translation selon un axe perpendiculaire au plan de mise en vibration (P1) de la table vibrante (120).

12. Dispositif (100) selon l'une des revendications 10 à 11 **caractérisé en ce que** le capot amovible (150) comporte un logement (151) configuré pour recevoir l'extrémité libre de la broche (112) lorsqu'il est dans la position de fermeture.

13. Dispositif (100) selon l'une des revendications précédentes **caractérisé en ce qu'**il comporte un moteur configuré pour mettre en vibration la table vibrante (120) à une fréquence comprise entre 1000 Hz et 12000 Hz, préférentiellement entre 4000 Hz et 8000 Hz.

14. Dispositif (100) selon la revendication précédente **caractérisé en ce que** le moteur est un moteur pneumatique ou un moteur piézoélectrique.

15. Procédé de fabrication (200) d'un ressort spiral destiné à équiper un balancier d'un mouvement d'horlogerie, le procédé de fabrication (200) étant **caractérisé en ce qu'**il comporte une étape (260) de séparation d'un ensemble (10) de ressorts spiraux (12) estrapadés et ayant subis un cycle de détente par la mise en œuvre du dispositif de séparation (100) selon l'une des revendications précédentes.

16. Procédé de fabrication (200) d'un ressort spiral destiné à équiper un balancier d'un mouvement d'horlogerie, selon la revendication précédente, **caractérisé en ce que** le procédé (200) comporte, préalablement à l'étape (260) de séparation, une étape (240) d'estrapadage consistant à enrouler une pluralité de fils laminés dans un barillet (2) au moyen d'une étoile d'estrapadage de manière à former l'ensemble (10) de ressorts spiraux (12) estrapadés.

17. Procédé de fabrication (200) d'un ressort spiral destiné à équiper un balancier d'un mouvement d'horlogerie, selon la revendication précédente, **caractérisé en ce que** le procédé (200) comporte, après l'étape (240) d'estrapadage, une étape (250) de relaxation des contraintes de l'ensemble (10) de ressort spiraux (12) estrapadés.

18. Procédé de fabrication (200) d'un ressort spiral destiné à équiper un balancier d'un mouvement d'horlogerie, selon l'une des revendications 15 à 17, **caractérisé en ce que** le ressort spiral (12) est un ressort compensateur.

19. Procédé de fabrication (200) d'un ressort spiral destiné à équiper un balancier d'un mouvement d'horlogerie, selon la revendication précédente, **caractérisé en ce que** le ressort spiral (12) est réalisé dans un alliage de niobium et de titane.

## Patentansprüche

1. Vorrichtung (100) zum Trennen eines Satzes (10) von aufgewundenen Spiralfedern (12), die einen Entspannungszyklus durchlaufen haben, wobei die Vorrichtung (100) umfasst:
- einen Träger (110) mit Kerben (113) zur Aufnahme der inneren Enden (13) der den Satz (10) bildenden estrapadierten Spiralfedern (12), wobei die Vorrichtung (100) **dadurch gekennzeichnet ist, dass** sie ferner
- einen Schwingtisch (120) aufweist, der entlang zweier verschiedener Achsen beweglich ist, die sich in einer gemeinsamen Ebene erstrecken und eine Schwingungsebene (P1) definieren, wobei der Schwingtisch (120) dazu ausgebildet ist, den genannten Träger (110) in einer zur Schwingungsebene (P1) parallelen Ebene in Schwingung zu versetzen.

2. Vorrichtung (100) nach dem vorhergehenden Anspruch, **dadurch gekennzeichnet, dass** die beiden Schwingungsachsen orthogonal zueinander sind.

3. Vorrichtung (100) nach einem der vorhergehenden Ansprüche, **dadurch gekennzeichnet, dass** der Schwingtisch (120) eine kreisförmige Translationsbewegung ausführt.

4. Vorrichtung (100) nach einem der vorhergehenden Ansprüche, **dadurch gekennzeichnet, dass** der Träger (11) einen mit dem Schwingtisch (120) fest verbundenen Körper (111) und einen mit dem Körper (111) fest verbundenen Dorn (112) aufweist, der sich senkrecht zu dem Körper (111) sowie zu der Schwingungsebene (P1) des genannten Schwingtisches (120) erstreckt.

5. Vorrichtung (100) nach dem vorhergehenden Anspruch, **dadurch gekennzeichnet, dass** die Kerben (113) im Bereich des freien Endes des Dorns (112) ausgebildet sind.

6. Vorrichtung (100) nach dem vorhergehenden Anspruch, **dadurch gekennzeichnet, dass** das freie Ende des Dorns (112) eine konische Form aufweist.

7. Vorrichtung (100) nach einem der vorhergehenden Ansprüche, **dadurch gekennzeichnet, dass** die Vorrichtung (100) einen Luftauswerfer (130) zum Auswerfen der infolge der Schwingungsanregung des Schwingtisches (120) getrennten Spiralfedern (12) aufweist.

8. Vorrichtung (100) nach dem vorhergehenden Anspruch, **dadurch gekennzeichnet, dass** die Vorrichtung (100) einen Auffangbehälter (140) zum Aufnehmen der ausgeworfenen Spiralfedern (12) aufweist.

9. Vorrichtung (100) nach einem der Ansprüche 5 bis 8, **dadurch gekennzeichnet, dass** die Vorrichtung (100) eine abnehmbare Abdeckung (150) aufweist, die dazu ausgebildet ist, das freie Ende des Dorns (112) zumindest teilweise abzudecken.

10. Vorrichtung (100) nach dem vorhergehenden Anspruch, **dadurch gekennzeichnet, dass** die abnehmbare Abdeckung (150) zwischen einer Schließstellung, in der das Entfernen der Spiralfedern (12) von dem Träger (110) verhindert wird, und einer Öffnungsstellung beweglich ist, in der das Aufsetzen des Satzes (10) estrapadierter Spiralfedern (12) auf den Träger (110) und das Entfernen der getrennten Spiralfedern (12) von dem Träger (110) ermöglicht wird.

11. Vorrichtung (100) nach dem vorhergehenden Anspruch, **dadurch gekennzeichnet, dass** die abnehmbare Abdeckung (150) entlang einer zu der Schwingungsebene (P1) des Schwingtisches (120) senkrechten Achse translatorisch beweglich ist.

12. Vorrichtung (100) nach einem der Ansprüche 10 bis 11, **dadurch gekennzeichnet, dass** die abnehmbare Abdeckung (150) eine Aufnahme (151) aufweist, die dazu ausgebildet ist, in der Schließstellung das freie Ende des Dorns (112) aufzunehmen.

13. Vorrichtung (100) nach einem der vorhergehenden Ansprüche, **dadurch gekennzeichnet, dass** sie einen Motor aufweist, der dazu ausgebildet ist, den Schwingtisch (120) mit einer Frequenz zwischen 1000 Hz und 12000 Hz, vorzugsweise zwischen 4000 Hz und 8000 Hz, in Schwingung zu versetzen.

14. Vorrichtung (100) nach dem vorhergehenden Anspruch, **dadurch gekennzeichnet, dass** der Motor ein pneumatischer Motor oder ein piezoelektrischer Motor ist.

15. Herstellungsverfahren (200) für eine Spiralfeder, die dazu bestimmt ist, eine Unruh eines Uhrwerks auszustatten, wobei das Herstellungsverfahren (200) **dadurch gekennzeichnet ist, dass** es einen Schritt (260) zum Trennen eines Satzes (10) von estrapadierten Spiralfedern (12), die einen Entspannungszyklus durchlaufen haben, mittels der Trennvorrichtung (100) nach einem der vorhergehenden Ansprüche umfasst.

16. Herstellungsverfahren (200) für eine Spiralfeder, die dazu bestimmt ist, eine Unruh eines Uhrwerks auszustatten, nach dem vorhergehenden Anspruch, **dadurch gekennzeichnet, dass** das Verfahren (200) vor dem Trennschritt (260) einen Estrapadierschritt (240) umfasst, der darin besteht, eine Mehrzahl gewalzter Drähte mittels eines Estrapadiersterns in einer Trommel (2) aufzuwickeln, um den Satz (10) estrapadierter Spiralfedern (12) zu bilden.

17. Herstellungsverfahren (200) für eine Spiralfeder, die dazu bestimmt ist, eine Unruh eines Uhrwerks auszustatten, nach dem vorhergehenden Anspruch, **dadurch gekennzeichnet, dass** das Verfahren (200) nach dem Estrapadierschritt (240) einen Schritt (250) zur Spannungsrelaxation des Satzes (10) estrapadierter Spiralfedern (12) umfasst.

18. Herstellungsverfahren (200) für eine Spiralfeder, die dazu bestimmt ist, eine Unruh eines Uhrwerks auszustatten, nach einem der Ansprüche 15 bis 17, **dadurch gekennzeichnet, dass** die Spiralfeder (12) eine Kompensationsspiralfeder ist.

19. Herstellungsverfahren (200) für eine Spiralfeder, die dazu bestimmt ist, eine Unruh eines Uhrwerks auszustatten, nach dem vorhergehenden Anspruch, **dadurch gekennzeichnet, dass** die Spiralfeder (12) aus einer Niob-Titan-Legierung hergestellt ist.

## Claims

1. Device (100) for separating an assembly (10) of balance springs (12) which have been wound in and have undergone an expansion cycle, the device (100) comprising a support (110) comprising notches (113) intended to receive the inner strands (13) of the wound in balance springs (12) making up the assembly (10), said device (100) being **characterised in that** it comprises also a vibrating table (120) movable along two different axes which extend in the same plane, defining a vibration plane (P1), the vibrating table (120) being configured to cause said support (110) to vibrate in a plane parallel to the vibration plane (P1).

2. Device (100) according to the preceding claim, **characterised in that** the two vibration axes are orthogonal.

3. Device (100) according to one of the preceding claims, **characterised in that** the vibrating table (120) vibrates in a circular translational motion.

4. Device (100) according to one of the preceding claims, **characterised in that** the support (11) comprises a body (111) integral with the vibrating table (120) and a spindle (112) integral with the body (111) and extending perpendicularly to the body (111) and to the vibration plane (P1) of said vibrating table (120).

5. Device (100) according to the preceding claim, **characterised in that** the notches (113) are formed at the free end of the spindle (112).

6. Device (100) according to the preceding claim, **characterised in that** the free end of the spindle (112) is conical in shape.

7. Device (100) according to one of the preceding claims, **characterised in that** the device (100) comprises an air ejector (130) for ejecting the separated balance springs (12) when the vibrating table is caused to vibrate (120).

8. Device (100) according to the preceding claim, **characterised in that** the device (100) comprises a collection tray (140) to receive the ejected balance springs (12).

9. Device (100) according to one of claims 5 to 8, **characterised in that** the device (100) comprises a removable cover (150) configured to at least partially cover the free end of the spindle (112).

10. Device (100) according to the preceding claim, **characterised in that** the removable cover (150) is movable between a closed position preventing the balance springs (12) from being removed from the support (110) and an open position allowing the assembly (10) of wound in balance springs (12) to be inserted onto the support (110) and allowing the balance springs (12) separated from the support (110) to be removed.

11. Device (100) according to the preceding claim, **characterised in that** the removable cover (150) can be moved translatably along an axis perpendicular to the vibration plane (P1) of the vibrating table (120).

12. Device (100) according to one of claims 10 to 11, **characterised in that** the removable cover (150) comprises a recess (151) configured to receive the free end of the spindle (112) when it is in the closed position.

13. Device (100) according to one of the preceding claims, **characterised in that** it comprises a motor configured to cause the vibrating table (120) to vibrate at a frequency of between 1,000 Hz and 12,000 Hz, preferably between 4,000 Hz and 8,000 Hz.

14. Device (100) according to the preceding claim, **characterised in that** the motor is an air motor or a piezoelectric motor.

15. Method (200) for manufacturing a balance spring intended to equip a balance of a horological movement, the manufacturing method (200) being **characterised in that** it comprises a step (260) of separating an assembly (10) of wound in balance springs (12) having undergone an expansion cycle, which step is carried out by implementing the separation device (100) according to one of the preceding claims.

16. Method (200) for manufacturing a balance spring intended to equip a balance of a horological movement, according to the preceding claim, **characterised in that** the method (200) comprises, prior to the separation step (260), a winding in step (240) consisting of winding a plurality of rolled wires in a barrel (2) by means of a winding star so as to form the assembly (10) of wound in balance springs (12).

17. Method (200) for manufacturing a balance spring intended to equip a balance of a horological movement, according to the preceding claim, **characterised in that** the method (200) comprises, after the winding in step (240), an expansion step (250) for relieving the stresses in the assembly (10) of wound in balance springs (12).

18. Method (200) for manufacturing a balance spring intended to equip a balance of a horological movement, according to one of claims 15 to 17, **characterised in that** the balance spring (12) is a compensating spring.

19. Method (200) for manufacturing a balance spring intended to equip a balance of a horological movement, according to the preceding claim, **characterised in that** the balance spring (12) is made of a niobium and titanium alloy.
